Europäisches Patentamt

European Patent Office

Office européen des brevets

(19)

(11) **EP 1 191 338 A1**

(12) **EUROPEAN PATENT APPLICATION**
published in accordance with Art. 158(3) EPC

(43) Date of publication:
**27.03.2002 Bulletin 2002/13**

(51) Int Cl.⁷: **G01P 15/125**, H01L 41/08

(21) Application number: **00913060.0**

(86) International application number:
**PCT/JP00/02121**

(22) Date of filing: **31.03.2000**

(87) International publication number:
**WO 01/75457 (11.10.2001 Gazette 2001/41)**

(84) Designated Contracting States:
**AT BE CH CY DE DK ES FI FR GB GR IE IT LI LU MC NL PT SE**

(71) Applicant: **MITSUBISHI DENKI KABUSHIKI KAISHA**
**Tokyo 100-8310 (JP)**

(72) Inventors:
• **YOSHIKAWA, Eiji, Mitsubishi Denki Kabushiki K.**
**Chiyoda-ku, Tokyo 100-8310 (JP)**

• **TSUGAI, Masahiro,**
**Mitsubishi Denki Kabushiki K.**
**Chiyoda-ku, Tokyo 100-8310 (JP)**
• **HIRATA, Yoshiaki,**
**Mitsubishi Denki Kabushiki K.**
**Chiyoda-ku, Tokyo 100-8310 (JP)**

(74) Representative: **HOFFMANN - EITLE**
**Patent- und Rechtsanwälte**
**Arabellastrasse 4**
**81925 München (DE)**

(54) **ACCELERATION SENSOR**

(57)    A movable body 15 that is displaced in a direction parallel to the electrode surfaces of a first and a second pairs of stationary electrodes is inserted in electric fields in spaces between the first and the second pairs of stationary electrodes.

FIG.3

(a)

(b)

EP 1 191 338 A1

**Description**

TECHNICAL FIELD

The present invention relates to a capacitance-type acceleration sensor that can be mass-manufactured, and be fabricated at low cost.

BACKGROUND ART

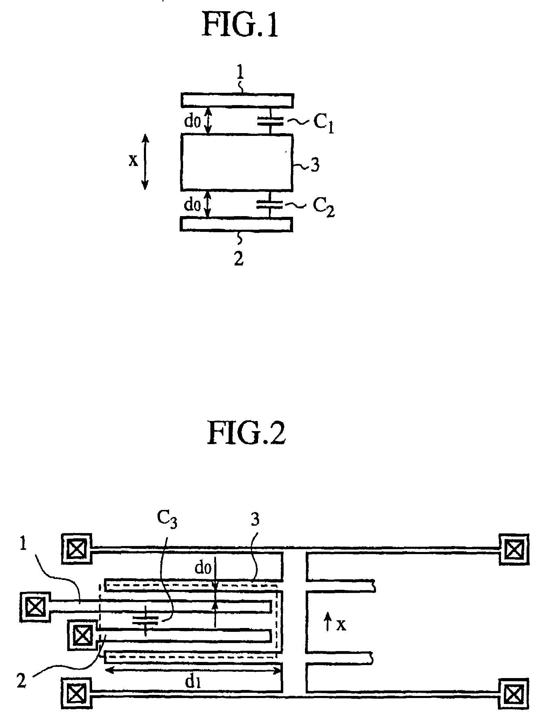

Fig. 1 is a block diagram showing a conventional acceleration sensor described in Japanese Patent Publication (*kokoku*) No. 44008/1994. Referring to the figure, stationary electrodes 1 and 2 are formed of polysilicon thin films suspended above a substrate, a movable electrode 3 is also formed of a polysilicon thin film suspended above the substrate, the stationary electrode 1 and the movable electrode 3 form a capacitor $C_1$, and the stationary electrode 2 and movable electrode 3 form a capacitor $C_2$.

The operation of the circuit will next be described.

In the initial state, the stationary electrode 1 and the movable electrode 3 are located separated by a distance $d_0$, and the stationary electrode 2 and movable electrode 3 are also located separated by the distance $d_0$.

The movable electrode 3 can travel in the direction of the arrow, and the distance $d_0$ is typically 1-2 $\mu$m. The thicknesses of the polysilicon thin films forming the stationary electrodes 1, 2, and the movable electrode 3 are typically of the order of 2-3 $\mu$m.

In such a composition, the stationary electrode 1 and movable electrode 3 form the capacitor $C_1$, the stationary electrode 2 and movable electrode 3 form capacitor $C_2$, and the initial capacitances thereof are typically of the order of 0.1 pF.

Herein, assume that an acceleration is applied downward in the figure, and thereby the movable electrode 3 travels upward by x. Since at that time the capacitor plate separations of the capacitor $C_1$ and capacitor $C_2$ are $d_0$-x and $d_0$+x, respectively, the capacitances $C_1$ and $C_2$ (of the capacitors $C_1$ and $C_2$) are as follows when each of the initial capacitances thereof is equally $C_0$.

$$C_1 = C_0/(1\text{-}x/d_0) \qquad (1)$$

$$C_2 = C_0/(1\text{+}x/d_0) \qquad (2)$$

Accordingly, the detection of these capacitance changes enables the measurement of the acceleration applied from the outside.

In addition, as apparent from Equations (1) and (2), even if the initial capacitances of the capacitor $C_1$ and capacitor $C_2$ are equal to each other, there is a difference between C1 and $C_2$ by the capacitance changes.

Since the conventional acceleration sensor is configured as mentioned above, a wide dynamic range can be obtained by enlarging the distances $d_0$ between the stationary electrodes 1, 2 and the movable electrode 3. However, there has been a problem that the distances $d_0$ between the stationary electrode 1, 2 and the movable electrode 3 cannot be enlarged due to a structural reason of such an equipment.

To be more specific, since a phenomenon in which the capacitance change is caused by a movement of the movable electrode 3 as a common electrode in the arrow direction is used, the dynamic range is limited by the distance $d_0$ in the initial state even if an amount of displacement x of the movable electrode 3 is the maximum.

Actually, as shown in Fig. 2, the lengths $d_1$ of the stationary electrodes 1, 2, and the movable electrode 3 are configured to be about 100-150 $\mu$m, and a great number of the electrodes are provided in a parallel arrangement to produce a comb-like shape, to thereby obtain an initial capacitance of about 0.1 pF. In order to obtain a wide dynamic range, a range in which the movable electrode 3 can travel should be made wide. That is, although the distances $d_0$ between the stationary electrode 1, 2, and the movable electrode has to be made longer, the measurement of acceleration becomes difficult because of too small capacitance if the distance $d_0$ is made further longer. This is because the initial capacitance of about 0.1 pF can be barely obtained by enlarging the length $d_1$. Therefore, the structure makes it difficult to obtain the wide dynamic range.

Incidentally, since the sensor has an elongated comb-like shape in which the length $d_1$ of the stationary electrodes 1, 2, and the movable electrode 3 are provided over 100 $\mu$m in order to ensure the initial capacitance, these electrodes cannot be detached due to these adherence to the substrate in a cleaning/drying process necessary for the fabrication. Additionally, the adjacent comb-shaped electrodes sometimes may adhere to each other in operation after the fabrication. For these reasons, there are many difficulties in enhancing the yield and reliability.

Moreover, since the stationary electrode 1, 2, and movable electrode 3 are arranged as shown in Fig. 2 to establish the capacitance, a parasitic capacitance $C_3$ which is not related to a detection capacitance might be established in a portion where the stationary electrode 1 and stationary electrode 2 are adjacent to each other.

In addition, as shown in Equations (1) and (2), since the amounts of change of the capacitances $C_1$ and $C_2$ are not equal to each other with respect to the amount of displacement x of the movable electrode 3, the sensor might present a nonlinear detection characteristic when the amount of displacement x is enlarged.

The present invention has been accomplished to solve the above-described problems, and it is directed to a high-reliability acceleration sensor in which a wide dynamic range can be obtained.

DISCLOSURE OF THE INVENTION

The acceleration sensor according to the present invention comprises a movable body that is inserted spanning the electric field in the space between a first pair of stationary electrodes and the electric field in the space between a second pair of stationary electrodes, and undergoes displacement corresponding to the amount of the acceleration when the movable body is accelerated from the outside.

Thereby, there is an effect that obtains a high-reliability acceleration sensor in which a wide dynamic range may be greatly ensured.

The acceleration sensor according to the present invention is characterized in that a first and a second pairs of stationary electrodes are provided in a physically parallel arrangement, and a movable body that is displaced in the direction parallel to the electrode surfaces of the first and the second pairs of stationary electrodes is inserted in the electric fields in the space between the first pair of stationary electrodes and in the space between the second pair of stationary electrodes.

Thereby, there is an effect that the amount of displacement of the movable body may be freely designed.

The acceleration sensor according to the present invention is characterized in that a first pair of stationary electrodes and a movable body form a first capacitance cell, and a second pair of stationary electrodes and the movable body form a second capacitance cell.

Thereby, there is an effect that the structure of the acceleration sensor may be simplified.

The acceleration sensor according to the present invention is characterized in that a plurality of first capacitance cells are connected in parallel, and a plurality of second capacitance cells are connected in parallel.

Thereby, there is an effect that accuracy of measurement of capacitance may be enhanced.

The acceleration sensor according to the present invention is characterized in that a polysilicon member suspended above a silicon substrate is processed to form a first and a second stationary electrodes and a movable body.

Thereby, there is an effect that since the acceleration sensor can be manufactured by use of production equipment for semiconductor integrated circuits, miniaturization and mass production thereof may be achieved and the production cost may be reduced.

The acceleration sensor according to the present invention is characterized in that a polysilicon member suspended above a glass substrate is processed to form a first and a second stationary electrodes and a movable body.

Thereby, there is an effect that the stationary electrode and the movable body may be thickened by use of a deeply-dry-etching machine for silicon, resulting in an enhanced detection sensitivity.

BRIEF DESCRIPTION OF DRAWINGS

Fig. 1 is a block diagram showing a conventional acceleration sensor.
Fig. 2 is a plan view showing a conventional acceleration sensor.
Fig. 3 is a block diagram showing the acceleration sensor according to Embodiment 1 of the present invention.
Fig. 4 is a block diagram showing the acceleration sensor according to Embodiment 2 of the present invention.
Fig. 5 is a plan view showing the acceleration sensor according to Embodiment 3 of the present invention.
Fig. 6 is a sectional view taken on line A-A in Fig. 5.
Fig. 7 is a sectional view taken on line B-B in Fig. 5.

BEST MODE FOR CARRYING OUT THE INVENTION

The embodiments of the present invention will next be described in order to describe the present invention in detail with reference to the drawings.

Embodiment 1.

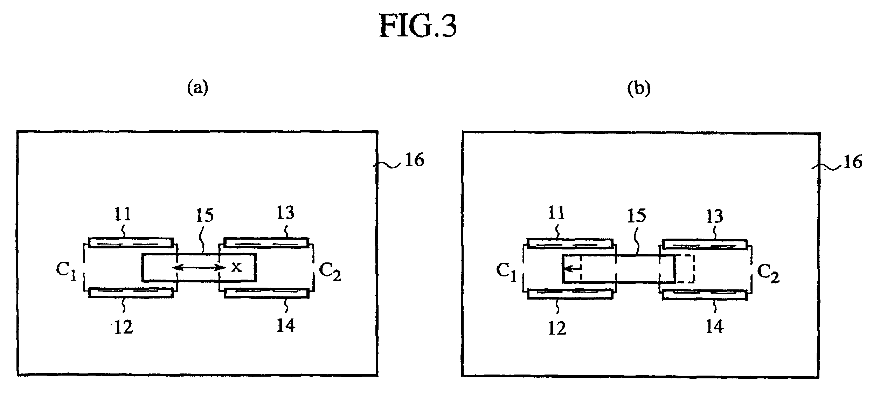

Fig. 3 is a block diagram showing an acceleration sensor according to Embodiment 1 of the present invention. Particularly, Fig. 3 (a) shows an initial state, and Fig. 3 (b) shows a state in which an acceleration is applied.

Referring to Fig. 3, a stationary electrode 11 is arranged by opposing to a stationary electrode 12 to form a capacitor $C_1$ (first capacitor): the stationary electrode 12 is arranged by opposing to the stationary electrode 11 to form the capacitor $C_1$ (first capacitor). By the way, the stationary electrode 11 and stationary electrode 12 configure a first pair of stationary electrodes.

A stationary electrode 13 is arranged by opposing to a stationary electrode 14 to form a capacitor $C_2$ (second capacitor): the stationary electrode 14 is arranged by opposing to stationary electrode 13 to form the capacitor $C_2$ (second capacitance). Here, the stationary electrode 13 and stationary electrode 14 configure a second pair of stationary electrodes.

A movable body 15 is inserted in a fashion to span an electric field in a space between the first pair of stationary electrodes on a silicon substrate 16, and an electric field in a space between the second pair of stationary electrodes on the substrate 16, and undergoes a displacement in an arrow direction corresponding to the amount or dimension of the acceleration when the movable body is accelerated from the outside.

The operation of the acceleration sensor will next be described.

The stationary electrodes 11-14 and movable body 15 are formed of polysilicon thin films suspended above the silicon substrate 16, to be put in a state as shown of Fig. 3 (a). That is, a polysilicon thin film is formed on the silicon substrate 16, followed by patterning the polysilicon thin film, to thereby form the capacitors $C_1$ and $C_2$.

When an acceleration is applied in a system of the capacitors $C_1$ and $C_2$ configured as mentioned above, for instance, to the right side direction in the figure, the movable body 15 undergoes a displacement to the left side direction in the figure, thereby to be put in a state as shown in Fig. 3 (b).

At this time, with respect to the capacitance $C_1$ established by the stationary electrodes 11 and 12, the total capacitance value thereof increases because of an increase of capacitance value in a portion into which the movable body 15 is newly inserted.

On the other hand, with respect to the capacitance $C_2$ established by the stationary electrodes 13 and 14, the total capacitance value thereof reduces because of a decrease of capacitance value in a portion from which the movable body 15 is newly removed.

That is, the capacitors $C_1$ and $C_2$ operate as a differential capacitor. Accordingly, the detection of the capacitance change enables the measurement of the acceleration applied from the outside.

To better illustrate the measuring principle, in Fig. 3 an anchor portion for supporting the stationary electrodes 11-14 and the movable body 15 on the silicon substrate 16 is omitted. However, needless to say, actually, such an anchor portion supports these elements on the silicon substrate 16.

As is apparent from the above description, according to Embodiment 1, because the movable body 15 to be displaced in a direction parallel to the electrode surface of the first and the second pairs of stationary electrodes is inserted in the electric fields in the spaces between the first pair of stationary electrodes and between the second pair of stationary electrodes, the amount of displacement x of the movable body 15 can be freely designed, thereby obtaining a high-reliability acceleration sensor which enables to ensure a wider dynamic range.

Embodiment 2.

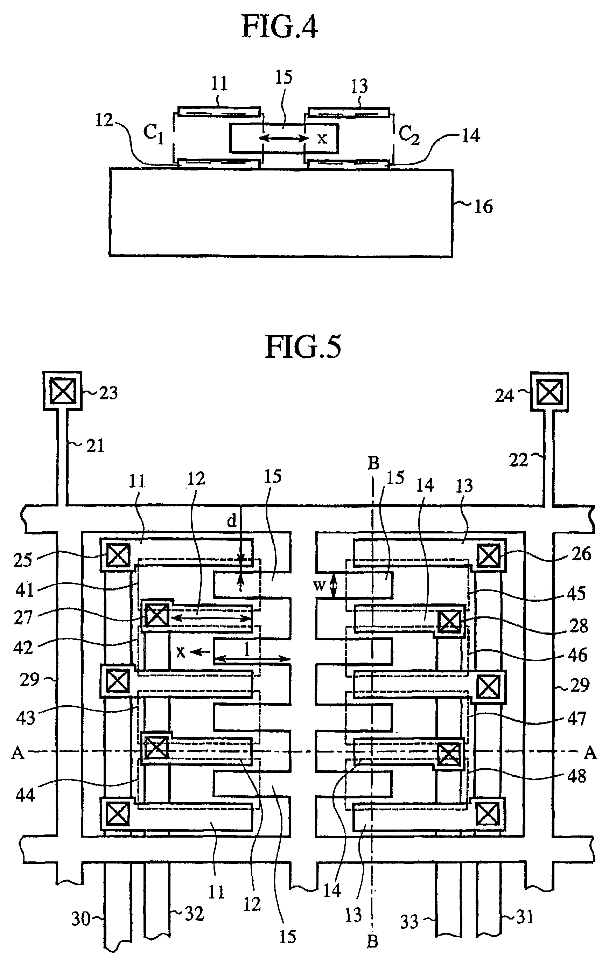

In the aforementioned Embodiment 1, an acceleration sensor in which only one polysilicon thin film formed on the silicon substrate 16 constitutes the capacitors $C_1$ and $C_2$ is shown. However, as shown in Fig. 4, a three-storied polysilicon-thin-film may optionally constitute such capacitors $C_1$ and $C_2$.

That is, a first polysilicon thin film may form stationary electrodes 12 and 14 on a silicon substrate 16, a second polysilicon thin film may form a movable body 15, and a third thin film may form stationary electrodes 11 and 13.

AS described above, the formation of the capacitors $C_1$ and $C_2$ enables the formation of the electrodes having a large depth, resulting in an enhanced detection sensitivity of the acceleration sensor.

Embodiment 3.

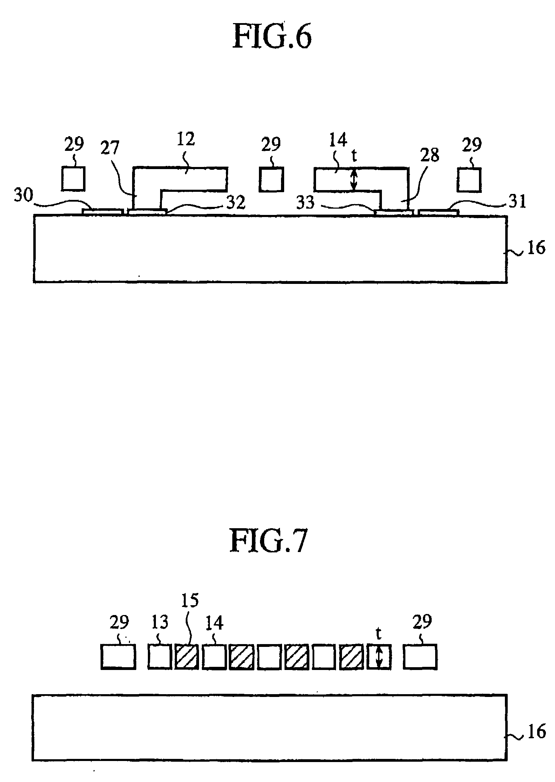

Fig. 5 is a plan view showing an acceleration sensor according to Embodiment 3 of the present invention. Fig. 6 is a sectional view taken on line A-A in Fig. 5. Fig. 7 is a sectional view taken on line B-B in Fig. 5. In the figures, since the portions designated by the same numerals as those of Fig. 3 show the similar portions, the explanation will be omitted.

Shown in the figures are beams 21, 22, anchors 23-28, a structural beam 29, lower wirings 30-33, capacitance cells (first capacitance cells) 41-44 established by stationary electrodes 11, 12 and a movable body 15, and capacitance cells (second capacitance cells) 45-48 established by stationary electrodes 13, 14 and the movable body 15.

The operation of the acceleration sensor will next be described.

The stationary electrodes 11 and 12 are partially fixed on a silicon substrate 16 by the anchors 25 and 27, and the portions of the stationary electrodes 11 and 12 that are not supported by the anchors are floating on the silicon substrate 16 to be put in the state of a cantilever beam.

The movable body 15 forms the capacitance cell 41 with the stationary electrodes 11 and 12, being inserted into a part of the portion, in which the stationary electrodes 11 and 12 are opposing to each other, provided in a plane in which these electrodes 11, 12 exist.

In a similar manner, the movable body 15 forms the capacitance cell 45, being also inserted into a part of the portion, in which the stationary electrodes 13 and 14 fixed by the anchors 26 and 28 on the substrate 16 are opposing to each other, provided in a plane in which these electrodes 13, 14 exist.

The stationary electrodes 11 and 12 are electrically connected with a great number of the other stationary electrodes 11 and 12 by the lower wirings 30 and 32, and the capacitance cells 41, 42, 43, 44, ....., connected in parallel form a capacitor $C_1$.

In a similar manner, stationary electrode 13 and 14 are also electrically connected with a great number of the other stationary electrodes 13 and 14 by the lower wirings 31 and 33, and the capacitance cells 45, 46, 47, 48, ....., connected in parallel form capacitor $C_2$.

On the other hand, the movable body 15 has a structure in which a great number of comb-shaped movable bodies are connected by a structural beam 29; the structure is partially fixed on the silicon substrate 16 by only the anchors 23 and 24 through the beams 21 and 22; and the portion except the above-described portion is floating on the silicon substrate 16. By the way, the width of structural beam 29 is made larger than the ones of the beams 21 and 22, to thereby increase the rigidity thereof.

As shown in Fig. 5, the movable body 15 can travel in the right and left directions in the figure when the beams 21 and 22 are provided. Such a configuration of the capacitors $C_1$ and $C_2$ enables the measurement of the acceleration in the right and left directions in the figure.

Herein, let, d = the distance between the stationary electrode 11 and movable body 15, d = the distance between the stationary electrode 12 and movable body 15, w = the width of the movable body 15, t = the thickness of polysilicon thin film, x = the amount of displacement of the movable body 15 caused by the application of acceleration, then, the capacitance change ∆C of one capacitance cell is shown by the following equation.

$$\Delta C = \varepsilon_0 \cdot t \cdot w \cdot x / (2d(2d+w)) \qquad (3)$$

wherein, $\varepsilon_0$ is dielectric constant of air.

The distances d between the stationary electrodes 11, 12, and the movable body 15 are given by typically 0.5-2 μm, the widths w of the stationary electrodes 11, 12, and the movable body 15 are typically 1-2 μm, the thickness t of polysilicon thin film is typically 2-4 μm, and the lengths 1 of the stationary electrodes 11, 12, and the movable body 15 are typically 5-20 μm.

Using the above configuration, the arrangement of a thousand capacitance cells within an area of 500 μm × 500 μm can produce about 0.5 pF as a initial capacitance.

By the way, the explanation was done on the assumption that the stationary electrodes 11-14 are all electrically separated. However, needless to say, either of the stationary electrode 11 and the stationary electrode 12, and either of the stationary electrode 13 and the stationary electrode 14 may be electrically connected.

As is apparent from the above explanation, since the change of capacitance has a linear relationship with the amount of displacement x as shown in Equation (3) according to Embodiment 3, a linear output can be obtained for the acceleration. Moreover, the changes of capacitance of $C_1$ and $C_2$ that establish a differential capacitance can be quite equal to each other.

Additionally, a parasitic capacitance $C_3$ in a portion in which the stationary electrodes are adjacent to each other, established in the conventional acceleration sensor as shown in Fig. 2, can be eliminated.

In addition, the amount of displacement can be freely designed since the movable body 3 is made to undergo a displacement in the direction parallel to the surfaces of the stationary electrodes. That is, as in the conventional acceleration sensor as shown in Fig. 1, the movable electrode 3 is not made to undergo a displacement in the direction perpendicular to the surfaces of the stationary electrodes. Accordingly, the dynamic range can be expanded.

Additionally, since the capacitance change does not occur even if the movable body 15 is displaced in the direction perpendicular to the surfaces of the stationary electrodes, a problem of sensitivity to an movement in the direction of other axes can be eliminated in principle.

Since the capacitance change does not depend on the initial capacitance but is determined by the amount of displacement x as shown in Equation (1), the formation of an elongated comb-shaped electrodes like the acceleration sensor as shown in Fig. 2 is not required. Therefore, a possibility that these comb-shaped electrodes may adhere to the substrate and are not separated therefrom in the manufacturing process and that the adjacent comb-shaped electrodes adhere to each other in operation after the fabrication can be reduced, thereby enhancing the yield and reliability of the acceleration sensor.

Moreover, in the acceleration sensor as shown in Fig. 1, the movable electrode 3 has to be kept in the state of electrical insulation from the stationary electrodes 1 and 2 in principle. However, in the acceleration sensor according to Embodiment 3, even if the movable body 15 is in contact with the stationary electrodes 11, 12, and the like, the influence on the capacitance change detected can be eliminated in principle.

Embodiment 4.

In the aforementioned Embodiments 1-3, the examples in which the polysilicon member suspended above the polysilicon substrate 16 is processed into the stationary electrodes 11-14 and movable body 15 are described. However, optionally, the polysilicon member suspended above a glass substrate may be processed into the stationary electrodes 11-14 and movable body 15.

Thereby, since a deeply-dry-etching machine for silicon can be applied, the thicknesses of the stationary electrodes 11-14 and movable body 15 can be increased. Accordingly, the detection sensitivity can increase based on Equation (3).

INDUSTRIAL APPLICABILITY

As mentioned above, the acceleration sensor according to the present invention is suitable for being built in a system in which a measuring range of acceleration should be made wide by use of a wide dynamic range.

**Claims**

1. An acceleration sensor comprising:

   a first pair of stationary electrodes that are arranged opposed to each other, and establish a first capacitance;
   a second pair of stationary electrodes that are arranged opposed to each other, and establish a second capacitance; and
   a movable body that is inserted spanning an electrical field in a space between the first pair of stationary electrodes and an electrical field in a space between the second pair of stationary electrodes, and undergoes a displacement corresponding to the amount or dimension of the acceleration when being accelerated from the outside.

2. An acceleration sensor according to Claim 1, wherein the first and the second pairs of stationary electrodes are provided in a physically parallel arrangement, and the movable body that is displaced in the direction parallel to the electrode surfaces of the first and the second pairs of stationary electrodes is inserted in the electric fields in the space between the first pair of stationary electrodes and in the space between the second pair of stationary electrodes.

3. An acceleration sensor according to Claim 1, wherein the first pair of stationary electrodes and the movable body forms a first capacitance cell, and the second pair of stationary electrodes and the movable body forms a second capacitance cell.

4. An acceleration sensor according to Claim 3, wherein a plurality of the first capacitance cells are connected in parallel, and a plurality of the second capacitance cells are connected in parallel.

5. An acceleration sensor according to Claim 1, wherein a polysilicon member suspended above a silicon substrate is processed to thereby form the first pair of stationary electrodes, the second pair of stationary electrodes, and the movable body.

6. An acceleration sensor according to Claim 1, wherein a polysilicon member suspended above a glass substrate is processed to thereby form the first pair of stationary electrodes, the second pair of stationary electrodes, and the movable body.

EP 1 191 338 A1

# FIG.1

# FIG.2

# FIG.3

EP 1 191 338 A1

EP 1 191 338 A1

# FIG.4

# FIG.5

9

# FIG.6

# FIG.7

## INTERNATIONAL SEARCH REPORT

| | International application No. |
|---|---|
| | PCT/JP00/02121 |

A. CLASSIFICATION OF SUBJECT MATTER
  Int.Cl⁷ G01P15/125, H01L41/08

According to International Patent Classification (IPC) or to both national classification and IPC

B. FIELDS SEARCHED

Minimum documentation searched (classification system followed by classification symbols)
  Int.Cl⁷ G01P15/125, H01L41/08

Documentation searched other than minimum documentation to the extent that such documents are included in the fields searched
  Jitsuyo Shinan Koho        1922-1996    Toroku Jitsuyo Shinan Koho   1994-2000
  Kokai Jitsuyo Shinan Koho  1971-2000    Jitsuyo Shinan Toroku Koho   1996-2000

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP, 6-102286, A (Murata Mfg. Co., Ltd.),<br>15 April, 1994 (15.04.94),<br>Par. Nos. [0032] to [0046]; all drawings<br>Par. Nos. [0032] to [0046]; all drawings<br>(Family: none) | 1-4<br>5,6 |
| X<br>Y | JP, 8-21852, A (Zexel Corporation),<br>23 January, 1996 (23.01.96),<br>Par. Nos. [0024] to [0026]; all drawings<br>Par. Nos. [0024] to [0026]; all drawings<br>(Family: none) | 1-4<br>5,6 |
| X<br>Y | JP, 5-113447, A (NOK Corporation),<br>07 May, 1993 (07.05.93),<br>Par. Nos. [0008] to [0017]; Figs. 3, 4<br>Par. Nos. [0008] to [0017]; Figs. 3, 4<br>(Family: none) | 1-3<br>4-6 |

☒ Further documents are listed in the continuation of Box C.     ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>06 June, 2000 (06.06.00) | Date of mailing of the international search report<br>20 June, 2000 (20.06.00) |
|---|---|
| Name and mailing address of the ISA/<br>  Japanese Patent Office | Authorized officer |
| Facsimile No. | Telephone No. |

Form PCT/ISA/210 (second sheet) (July 1992)

11

## INTERNATIONAL SEARCH REPORT

International application No.

PCT/JP00/02121

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | US, 5337606, A (Motorola, Inc.),<br>16 August, 1994 (16.08.94),<br>column 4, line 20 to column 5, line 17; Figs. 3, 5<br>column 4, line 20 to column 5, line 17; Figs. 3, 5<br>& JP, 6-109759, A  & EP, 582797, A1<br>& DE, 69306687, T  & HK, 1004293, A | 1-5<br>6 |
| Y | JP, 10-190005, A (Mitsubishi Materials Corporation),<br>21 July, 1998 (21.07.98),<br>Par. No. [0020]; Figs. 1, 2<br>(Family: none) | 5,6 |

Form PCT/ISA/210 (continuation of second sheet) (July 1992)